# FASCICULE DE BREVET EUROPEEN

(11) **EP 0 591 063 B1**
(45) Date de publication et mention de la délivrance du brevet: **27.11.1996**
(21) Numéro de dépôt: 93402412.6
(22) Date de dépôt: 01.10.1993
(51) Int. Cl.: B60S 1/60

(54) **Essuie-glace, notamment pour une vitre de phare de véhicule automobile**
Scheibenwischer, inbesondere für eine Scheibe eines Autoscheinwerfers
Wiper, especially for the glass of the headlight of a motor vehicle

(30) Priorité: 02.10.1992 FR 9211707
(43) Date de publication de la demande: 06.04.1994
(73) Titulaire: PAUL JOURNEE S.A., F-92700 Colombes (FR)
(72) Inventeur: Journee, Maurice, F-60240 Reilly (FR)
(74) Mandataire: Lemaire, Marc

(56) Documents cités:
- EP-A- 0 354 279
- EP-A- 0 405 837
- DE-A- 3 125 625
- DE-A- 3 331 310

## Description

La présente invention concerne un essuie-glace de véhicule automobile.

L'invention concerne plus particulièrement un essuie-glace pour une vitre de phare avant de véhicule automobile, également appelé essuie-phare.

Selon une conception classique, qui est également utilisée pour les essuie-glaces du pare-brise ou de la vitre arrière du véhicule, un essuie-phare comprend un bras d'essuie-glace et un balai d'essuie-glace qui est monté pivotant sur le bras d'essuie-glace autour d'un axe sensiblement perpendiculaire à la direction longitudinale du bras et qui comporte une structure de support d'une lame d'essuyage de la vitre.

Bien que leurs conditions d'utilisation soient sensiblement différentes de celles des essuie-glaces de pare-brise, les essuie-phares actuellement utilisés se présentent en fait comme des essuie-glaces de pare-brise de dimensions réduites adaptées à la dimension des vitres de phare.

On constate néanmoins que certaines de leurs caractéristiques telles que les moyens de connexion et d'articulation de la structure porte-lame à l'extrémité du bras d'essuie-glace, et que l'encombrement d'un tel type d'essuie-glace classique nuisent à l'efficacité de l'essuyage et à la fiabilité des dispositifs.

Les essuie-phares sont en effet notamment agencés dans une zone dans laquelle ils sont soumis à de nombreux chocs et à des projections, par exemple de petits cailloux.

De plus, les vitres de phares sont salies beaucoup plus vite que le pare-brise et sont notamment recouvertes de poussière et d'insectes collés qui nécessitent, pour leur nettoyage, de disposer d'un essuie-glace dont la lame d'essuyage travaille dans les meilleures conditions possibles et est soumise à une pression d'essuyage particulièrement élevée.

Afin de remédier à ces inconvénients, l'invention propose un essuie-glace, notamment pour une vitre de phare de véhicule automobile, du type comportant un bras d'essuie-glace et un balai d'essuie-glace qui est monté pivotant sur le bras d'essuie-glace autour d'un axe perpendiculaire à la direction longitudinale du bras et qui comporte une structure de support d'une lame d'essuyage de la vitre à essuyer, le bras comportant un corps principal allongé et creux en matière plastique dans lequel est agencée au moins en partie la structure de support de la lame d'essuyage, le corps principal comportant deux joues latérales parallèles reliées entre elles par un dos supérieur de manière que le corps présente, en section par un plan transversal, sensiblement la forme d'un U renversé, la structure de support comportant un axe de pivotement qui est monté par emboîtement élastique dans un palier complémentaire formé dans la partie médiane du corps principal, le palier étant constitué par deux demi-paliers formés respectivement en vis-à-vis sur chacune des faces internes des joues latérales (suivant les enseignements de DE-A-3 125 625), caractérisé en ce que, chaque demi-palier est une demi-portion de cylindre creux ouvert radialement en direction de la face inférieure ouverte du corps principal de manière à permettre l'introduction par emboîtement élastique des extrémités de l'axe de pivotement dans les deux demi-paliers ouverts et en ce que la structure de support comporte une pièce de connexion qui est reliée à l'axe de pivotement et dont la face supérieure comporte un poussoir d'éjection qui s'étend à travers une fenêtre du corps principal et qui fait saillie au-delà de la face externe du dos du corps principal, ladite fenêtre étant agencée au droit de l'axe de pivotement.

Selon divers modes de réalisation de l'invention :
- les demi-paliers sont réalisés venus de matière par moulage avec le corps principal en matière plastique ;
- la pièce de liaison comporte deux faces latérales parallèles et l'axe de pivotement est constitué par deux tétons cylindriques coaxiaux qui s'étendent respectivement depuis chacune des faces latérales parallèles de la pièce de connexion ;
- la pièce de liaison comporte un logement formé dans sa face inférieure et dans laquelle est reçue une portion de raccordement du palonnier ;
- le logement est une rainure longitudinale débouchante dont les flancs latéraux internes en vis-à-vis comportent des moyens de retenue de la portion de raccordement du palonnier ;
- les moyens de retenue comportent deux pions de retenue formés respectivement sur les flancs latéraux internes de la rainure et qui sont reçus dans des trous complémentaires formés dans des faces latérales parallèles de la portion de raccordement du palonnier qui sont reçues entre les flancs internes de la rainure.

D'autres caractéristiques et avantages de l'invention apparaîtront à la lecture de la description détaillée qui va suivre pour la compréhension de laquelle on se reportera aux dessins annexés dans lesquels :
- La figure 1 est une vue de dessous d'un bras d'essuie-phare réalisé conformément aux enseignements de l'invention ;
- la figure 2 est une vue en section selon la ligne 2-2 et à plus grande échelle de la partie médiane du bras d'essuie-glace de l'essuie-phare illustré à la figure 1;
- la figure 3 est une vue en section partielle selon la ligne 3-3 de la figure 1 de la partie principale du bras ;
- la figure 4 est une vue similaire à celle de la figure 3 illustrant la conception monobloc de la partie principale du corps du bras ;
- la figure 5 est une vue en section selon la ligne 5-5 de la figure 4 ; et
- la figure 6 est une vue latérale en élévation du balai de l'essuie-phare.

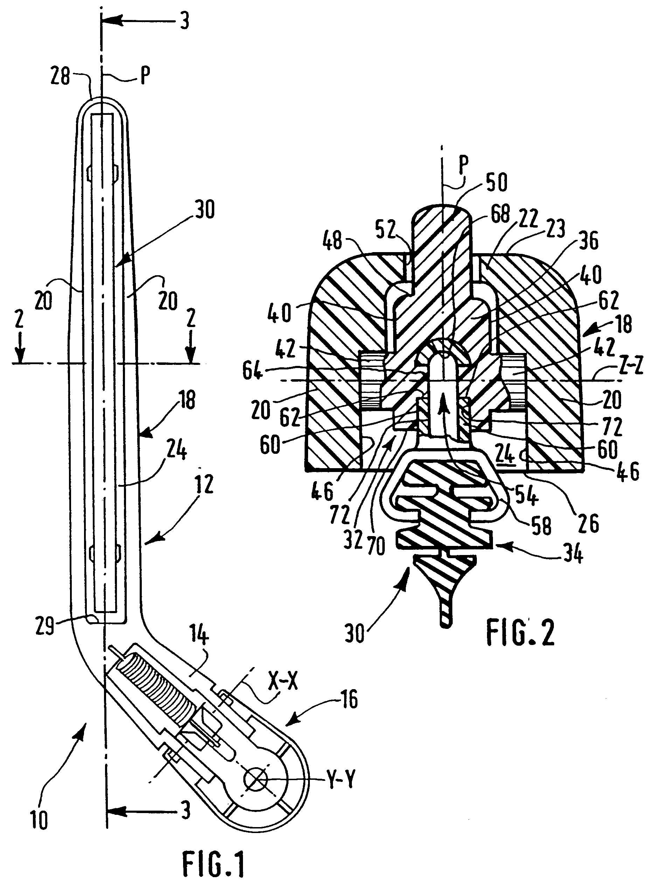

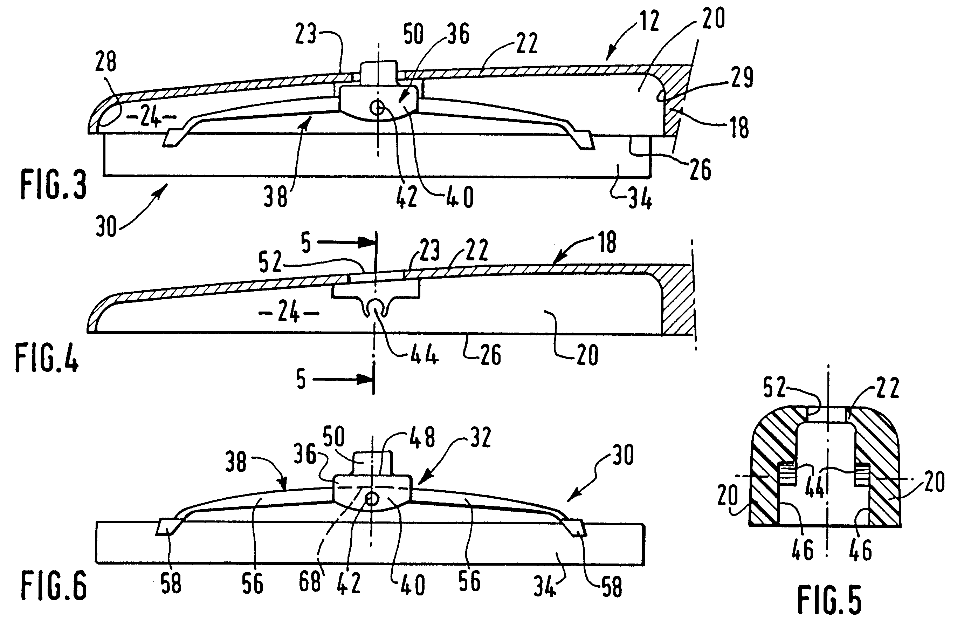

On a représenté sur la figure 1 un bras d'essuie-glace 10 destiné notamment à permettre l'essuyage de la vitre avant d'un phare de véhicule automobile (non représentée).

Le bras d'essuie-glace 10 comporte un corps principal en matière plastique 12 qui est articulé au voisinage de l'une de ses extrémités 14 autour d'un axe d'articulation X-X, sur une tête 16 d'entraînement du bras 10.

La tête 16 est conçue de manière à entraîner en rotation, dans un mouvement alternatif autour d'un axe Y-Y sensiblement perpendiculaire à l'axe X-X, le bras d'essuie-glace par des moyens d'entraînement (non représentés) auxquels est reliée la tête 16.

Le corps en matière plastique 12 comporte une partie principale allongée 18 qui présente une symétrie de conception par rapport à un plan longitudinal médian P qui s'étend selon la direction longitudinale générale du bras 10, et à laquelle est reliée l'extrémité de liaison 14 avec la tête 16 qui forme un coude avec la partie principale 18.

La partie principale 18 est un corps ou carter creux qui, en section par un plan transversal et comme on peut le voir à la figure 2, présente sensiblement la forme d'un U renversé.

Le corps principal 18 est à cet effet constitué par deux joues latérales parallèles 20 qui sont reliées entre elles par un dos supérieur 22.

Les joues latérales 20 et le dos 22 délimitent un espace interne sensiblement parallélépipédique rectangle 24 ouvert à sa face inférieure 26 et délimité à ses deux extrémités longitudinales par deux cloisons d'extrémité 28 et 29 qui prolongent les joues latérales 20.

Le logement interne 24 du corps principal 18 est prévu pour recevoir au moins partiellement un balai d'essuie-glace 30 comportant une structure 32 de support d'une lame d'essuyage ou de raclage 34.

La structure de support 32 comporte une pièce de connexion 36 et un palonnier 38.

La pièce de connexion 36 est une pièce moulée en matière plastique de forme générale parallélépipédique rectangle délimitée latéralement par deux faces latérales opposées 40 sur chacune desquelles est formé un téton cylindrique 42.

Les deux tétons 42 ont un axe géométrique commun Z-Z et ils s'étendent transversalement depuis les faces latérales 40.

Les tétons 42 constituent les extrémités de l'axe de pivotement de la pièce de connexion 36 par rapport au corps creux 18 du bras 12.

A cet effet, chacun des tétons 42 est reçu dans un demi-palier cylindrique creux 44 dont chacun est formé respectivement dans la face interne correspondante 46 d'une des joues latérales 20 est en partie ouvert radialement vers le bas, c'est-à-dire en direction de la face inférieure 26, de manière à permettre le montage des tétons 42 par emboîtement élastique dans les demi-paliers 44 qui sont réalisés venus de matière par moulage avec le corps creux 18.

La face supérieure 48 de la pièce de connexion 36 comporte un poussoir d'éjection 50 qui s'étend verticalement vers le haut, en considérant les figures, à travers une fenêtre 52 formée dans le dos supérieur 22 et qui fait saillie au-delà de la face supérieure 23 du dos 22.

Le poussoir 50 a pour fonction de permettre l'éjection de la structure de support 32 en provoquant le déboîtement des tétons 42 hors des demi-paliers 44 et donc de démontage du balai 30 en vue de son remplacement.

Les tétons 42 ont une double fonction de connexion et de maintien en position de la pièce 36 dans le corps 18 et l'articulation de cette dernière, et donc de la structure de support 32, autour d'un axe Z-Z sensiblement perpendiculaire à la direction longitudinale du bras 12.

Le palonnier 38 est une pièce allongée en matière plastique qui comporte une portion médiane creuse 54 qui permet son raccordement à la pièce de connexion 36, et qui comporte deux branches longitudinales opposées 56 dont les extrémités libres comportent des griffes 58 qui coopèrent avec le bord supérieur de la lame d'essuyage 34.

La portion médiane 54 comporte deux ailes latérales 60 parallèles dans chacune desquelles est formé un trou cylindrique 62 qui reçoit un pion de retenue cylindrique complémentaire 64 formé dans la pièce de connexion 36.

A cet effet, la pièce de connexion 36 comporte une rainure longitudinale débouchante 68 formée dans sa face inférieure 70 qui est délimitée latéralement par deux flancs internes parallèles 72 sur lesquels sont formés les pions 64 et entre lesquels sont reçues les faces parallèles externes des ailes latérales 60 de la portion médiane de raccordement 54 du palonnier 38.

Le montage de la portion médiane 54 dans la pièce de connexion 36 se fait par emboîtement élastique en introduisant verticalement la portion médiane dans la rainure 68 jusqu'à ce que les pions de retenue 64 pénètrent dans les trous 62 et en comprimant légèrement la portion médiane selon la direction transversale.

La pénétration des pions est facilitée par le profil supérieur arrondi de la portion médiane 54 qui procure un effet de rampe.

Après avoir assemblé la pièce de connexion 36 et le palonnier 38 préalablement équipé de la lame d'essuyage 34, l'ensemble du balai 30 illustré à la figure 6 peut être monté dans le corps 18 du balai en l'introduisant verticalement par la face ouverte 26 jusqu'à ce que les tétons 42 soient emboités élastiquement dans les demi-paliers 44.

A l'issue de cette opération le balai 60 est relié au corps 18 et est articulé en pivotement autour de l'axe Z-Z.

Comme on peut le voir notamment sur la figure 3, la plus grande partie du palonnier 38 est agencée dans le logement 24 et est protégée par le corps 18.

En fonctionnement, le palonnier 38, et la partie supérieure de la lame 34 sont ainsi protégés contre les projections.

Le corps creux 18 constitue également un capot aérodynamique du balai d'essuie-glace dont il améliore l'efficacité d'essuyage.

La fenêtre 52 formée dans le dos supérieur 22 du corps 18 est bien entendu dimensionnée longitudinalement de manière à permettre les mouvements de pivotement de la pièce 56 autour de l'axe Z-Z et il existe donc à cet effet un jeu entre les bords de la fenêtre 52 et les surfaces latérales en vis-à-vis du poussoir d'éjection 50.

Selon une variante de réalisation non représentée sur les figures, il est possible de réaliser la structure de support constituée par la pièce de connexion 36 et par le palonnier 38 en une seule pièce venue de moulage en matière plastique.

Toutefois, la conception en deux pièces permet une standardisation du corps 18 du bras 12 pour le montage de différentes lames d'essuyage 34 et de leurs palonniers de support associés.

L'invention n'est bien entendu pas limitée à la conception d'un essuie-phare à un seul palonnier 38, celui-ci pouvant constituer l'étrier principal d'une structure de support articulée d'une lame d'essuyage à plusieurs palonniers ou étriers de support.

## Revendications

1. Essuie-glace (10), notamment pour une vitre de phare de véhicule automobile, du type comportant un bras d'essuie-glace (12) et un balai d'essuie-glace (30) qui est monté pivotant sur le bras d'essuie-glace (12) autour d'un axe (Z-Z, 42) perpendiculaire à la direction longitudinale du bras et qui comporte une structure (36, 38) de support d'une lame (34) d'essuyage de la vitre à essuyer, le bras comportant un corps principal allongé et creux (18) en matière plastique dans lequel est agencée au moins en partie la structure de support de la lame d'essuyage (34), le corps principal (18) comportant deux joues latérales parallèles (20) reliées entre elles par un dos supérieur (22) de manière que le corps présente, en section par un plan transversal, sensiblement la forme d'un U renversé, la structure de support comportant un axe de pivotement (42) qui est monté par emboîtement élastique dans un palier complémentaire (44) formé dans la partie médiane du corps principal (18), le palier étant constitué par deux demi-paliers (44) formés respectivement en vis-à-vis sur chacune des faces internes (46) des joues latérales (20), caractérisé en ce que chaque demi-palier (44) est une demi-portion de cylindre creux ouvert radialement en direction de la face inférieure ouverte (26) du corps principal (18) de manière à permettre l'introduction par emboîtement élastique des extrémités de l'axe de pivotement (42) dans les deux demi-paliers ouverts (44) et en ce que la structure de support comporte une pièce de connexion (36) qui est reliée à l'axe de pivotement (42) et dont la face supérieure (48) comporte un poussoir d'éjection (50) qui s'étend à travers une fenêtre (52) du corps principal (18) et qui fait saillie au-delà de la face externe (23) du dos (22) du corps principal (18), ladite fenêtre (52) étant agencée au droit de l'axe de pivotement (42).

2. Essuie-glace selon la revendication 1, caractérisé en ce que les demi-paliers (44) sont réalisés venus de matière par moulage avec le corps principal en matière plastique (18).

3. Essuie-glace selon la revendication 1 caractérisé en ce que la pièce de liaison comporte deux faces latérales parallèles (40), et en ce que l'axe de pivotement (42) est constitué par deux tétons cylindriques coaxiaux (42) qui s'étendent respectivement depuis chacune desdites faces latérales parallèles (40) de la pièce de liaison (36).

4. Essuie-glace selon la revendication 3 caractérisé en ce que la pièce de liaison (36) comporte un logement (68) formé dans sa face inférieure (70) et dans lequel est reçue une portion de raccordement (54) du palonnier (38).

5. Essuie-glace selon la revendication 4, caractérisé en ce que le logement est une rainure longitudinale débouchante (68) dont les flancs latéraux internes en vis-à-vis (72) comportent des moyens (64) de retenue de la portion de raccordement (54) du palonnier (38).

6. Essuie-glace selon la revendication 5, caractérisé en ce que les moyens de retenue comportent deux pions de retenue (64) formés respectivement sur les flancs latéraux internes (72) de la rainure (68) et qui sont reçus dans des trous complémentaires (62) formés dans des faces latérales parallèles (60) de la portion de raccordement (54) du palonnier (38) qui sont reçues entre les flancs (72) de la rainure.

## Claims

1. Wiper (10), notably for the headlamp glass of a motor vehicle, of the type having a wiper arm (12) and a wiper (30) which is pivotally mounted on the wiper arm (12) about an axis (Z-Z, 42) perpendicular to the longitudinal direction of the arm and which has a structure (36, 38) supporting a blade (34) wiping the glass to be wiped, the arm having an elongate hollow main body (18) made of plastic, in which the structure supporting the wiper blade (34) is at least partially arranged, the main body (18) having two parallel side cheeks (20) connected together by a top web (22) so that the body has, in cross section through a transverse plane, substantially the shape of an inverted U, the support structure having a pivot pin (42) which is mounted by elastic nesting in a complementary bearing (44) formed in the middle part of the main body (18), the bearing consisting of two half-bearings (44) formed respectively opposite each other on each of the internal faces (46) of the side cheeks (20), characterised in that each half-bearing (44) is a half portion of a hollow cylinder open radially in the direction of the open bottom face (26) of the main body (18) so as to allow the insertion, by elastic nesting, of the ends of the pivot pin (42) in the two open half-bearings (44) and in that the support structure includes a connection piece (36) which is connected to the pivot pin (42) and the top face (48) of which includes an ejection push-button (50) which extends through an aperture (52) in the main body (18) and which projects beyond the external face (23) of the web (22) of the main body (18), the said aperture (52) being arranged in line with the pivot pin (42).

2. Wiper according to Claim 1, characterised in that the half-bearings (44) are produced by moulding in one piece with the main plastic body (18) .

3. Wiper according to Claim 1, characterised in that the connecting piece has two parallel lateral faces (40), and in that the pivot pin (42) is formed by two coaxial cylindrical studs (42) which extend respectively from each of the said parallel lateral faces (40) of the connecting piece (36).

4. Wiper according to Claim 3, characterised in that the connecting piece (36) has a housing (68) formed in its bottom face (70) and in which a connecting portion (54) of the spreader (38) is received.

5. Wiper according to Claim 4, characterised in that the housing is an open longitudinal groove (68), the facing internal lateral sides (72) of which have means (64) for retaining the connecting portion (54) of the spreader (38).

6. Wiper according to Claim 5, characterised in that the retaining means include two retaining pins (64) formed respectively on the internal lateral sides (72) of the groove (68) and which are received in complementary holes (62) formed in parallel lateral faces (60) of the connecting portion (54) of the spreader (38) which are received between the sides (72) of the groove.

## Patentansprüche

1. Scheibenwischer (10), insbesondere für die Scheibe eines Kraftfahrzeugscheinwerfers, umfassend einen Scheibenwischerarm (12) und ein Scheibenwischerblatt (30), das am Scheibenwischerarm (12) schwenkbar um eine senkrecht zur Längsachse des Wischerarms angeordnete Achse (Z-Z, 42) angebracht ist und das eine Halterungstruktur (36, 38) für einen Wischergummi (34) zum Wischen der Scheibe umfaßt, wobei der Scheibenwischerarm aus einem länglichen und hohlen Hauptkörper (18) aus Kunststoff besteht, in dem wenigstens teilweise die Halterungsstruktur für den Wischergummi (34) angeordnet ist, wobei der Hauptkörper (18) zwei parallele Seitenwände (20) umfaßt, die durch einen oberen Rücken (22) miteinander verbunden sind, so daß der Körper im Querschnitt in etwa die Form eines umgekehrten U aufweist, wobei die Halterungsstruktur eine Schwenkachse (42) enthält, die durch elastische Einpassung in ein formschlüssiges Lager (44) eingesetzt wird, das im Mittelteil des Hauptkörpers (18) ausgebildet ist, wobei das Lager aus zwei Halblagern (44) besteht, die jeweils gegenüberliegend an jeder der Innenseiten (46) der Seitenwände (20) ausgebildet sind, **dadurch gekennzeichnet**, daß jedes Halblager (44) ein halbes Teilstück eines Hohlzylinders darstellt, der radial in Richtung der offenen Unterseite (26) des Hauptkörpers (18) offen ist, so daß das mittels elastischer Einpassung erfolgende Einsetzen der Enden der Schwenkachse (42) in die beiden offenen Halblager (44) ermöglicht wird, und daß die Halterungsstruktur ein Anschlußstück (36) umfaßt, das mit der Schwenkachse (42) verbunden ist und dessen Oberseite (48) einen Ausdrückstift (50) umfaßt, der sich durch ein Fenster (52) des Hauptkörpers (18) erstreckt und der über die Außenseite (23) des Rückens (22) des Hauptkörpers (18) hinaus vorsteht, wobei das besagte Fenster (52) in Höhe der Schwenkachse (42) angeordnet ist.

2. Scheibenwischer nach Anspruch 1**, dadurch gekennzeichnet,** daß die Halblager (44) durch Formpressen einstückig mit dem Hauptkörper aus Kunststoff (18) ausgeführt sind.

3. Scheibenwischer nach Anspruch 1**, dadurch gekennzeichnet,** daß das Verbindungsstück zwei parallele Seitenflächen (40) umfaßt und daß die Schwenkachse (42) aus zwei koaxialen zylindrischen Zapfen (42) besteht, die sich jeweils von einer der besagten parallelen Seitenflächen (40) des Verbindungsstücks (36) aus erstrecken.

4. Scheibenwischer nach Anspruch 3**, dadurch gekennzeichnet,** daß das Verbindungsstück (36) eine Aufnahme (68) umfaßt, die in ihre Unterseite (70) eingearbeitet ist und in die ein Anschlußabschnitt (54) des Krallenbügels (38) eingesetzt ist.

5. Scheibenwischer nach Anspruch 4**, dadurch gekennzeichnet,** daß die Aufnahme aus einer durchgehenden Längsnut (68) besteht, deren gegenüberliegenden inneren Seitenflanken (72) Haltemittel (64) für den Anschlußabschnitt (54) des Krallenbügels (38) umfassen.

6. Scheibenwischer nach Anspruch 5**, dadurch gekennzeichnet,** daß die Haltemittel zwei Haltestifte (64) umfassen, die jeweils an den inneren Seitenflanken (72) der Nut (68) ausgebildet sind und die in formschlüssige Löcher (62) eingesetzt werden, welche in die parallelen Seitenflächen (60) des Anschlußabschnitts (54) des Krallenbügels (38) eingearbeitet sind, die zwischen den Flanken (72) der Nut eingesetzt werden.
